**Europäisches Patentamt**

**European Patent Office**

**Office européen des brevets**

(19)

(11) Veröffentlichungsnummer: **0 204 200 B1**

(12) **EUROPÄISCHE PATENTSCHRIFT**

(45) Veröffentlichungstag der Patentschrift:
**15.11.89**

(51) Int. Cl.⁴: **B29C 49/48, B29C 49/04**

(21) Anmeldenummer: **86106750.2**

(22) Anmeldetag: **16.05.86**

(54) **Verfahren und Vorrichtung zum Herstellen von Hohlkörpern aus thermoplastischem Material im Blasverfahren.**

(30) Priorität: **05.06.85 DE 3520127**

(43) Veröffentlichungstag der Anmeldung:
**10.12.86 Patentblatt 86/50**

(45) Bekanntmachung des Hinweises auf die Patenterteilung:
**15.11.89 Patentblatt 89/46**

(84) Benannte Vertragsstaaten:
**AT BE CH DE FR GB IT LI LU NL SE**

(56) Entgegenhaltungen:
**DE-A- 1 604 533**
**FR-A- 2 035 043**
**FR-A- 2 404 505**
**US-A- 3 592 885**
**US-A- 3 687 593**
**US-A- 3 692 453**
**US-A- 3 817 676**

(73) Patentinhaber: **PLM-RAKU GmbH, Im Wöhr 2,
D-7550 Rastatt(DE)**

(72) Erfinder: **Hagen, Norbert, Am Siegberg 2,
D-7554 Kuppenheim(DE)**

(74) Vertreter: **Koepsell, Helmut, Dipl.-Ing., Mittelstrasse 7,
D-5000 Köln 1(DE)**

## Beschreibung

Die Erfindung betrifft ein Verfahren und eine Vorrichtung zum Herstellen von Hohlkörpern aus thermoplastischem Material, bei welchen ein warmplastisches, schlauch- oder beutelartiges Zwischenerzeugnis in einer mit einem Formnest und entlang Randbereichen desselben verlaufenden Quetschbereichen versehenen zwei- oder mehrteiligen Hohlform durch inneren Überdruck aufgeweitet wird und beim Schließen der Hohlform wenigstens zwei Wandbereiche des Zwischenerzeugnisses paarweise durch die zusammenwirkenden Quetschbereiche der sich in Schließrichtung relativ zueinander bewegenden Hohlformteile in eine Lage gebracht werden, in der sie zwischen den Quetschbereichen einander gegenüberliegen und parallel zur Trennfläche der Hohlformteile verlaufen, von den Quetschbereichen gegeneinander gedrückt und unter Bildung einer Schweißnaht miteinander verschweißt werden, wobei zugleich Abfallmaterial durch die zusammenwirkenden Quetschbereiche abgequetscht werden kann und die einander gegenüberliegenden und miteinander zu verschweißenden Wandbereiche bei der Bildung der Schweißnaht eine zusätzliche Verformung erfahren derart, daß ein Teilbereich der Schweißnaht einen sägezahnartigen Verlauf erhält.

Bei dieser Arbeitsweise ist die Tatsache bedeutsam, daß im Verlauf des Quetschvorganges zwei Zielsetzungen berücksichtigt werden müssen, nämlich einmal Herstellen einer einwandfreien Schweißverbindung und zum anderen möglichst weitgehendes Abtrennen des überflüssigen, also des Abfallmaterials. Die dazu jeweils notwendigen Maßnahmen können nur mit Schwierigkeiten in Übereinstimmung gebracht werden. Tatsächlich sind die Maßnahmen und die aus ihnen herzuleitenden Wirkungen einander entgegengerichtet. Ein einwandfreies Abtrennen des Abfallmaterials setzt im allgemeinen relativ spitze Abquetschkanten voraus, wohingegen das Herstellen einer einwandfreien Schweißnaht möglichst großflächige Quetschbereiche erfordert.

Die sich daraus ergebenden Probleme, die beispielsweise in der DE-PS 2 364 510 beschrieben werden, sind besonders gravierend bei der Herstellung von Hohlkörpern aus thermoplastischem Material im Blasverfahren, bei welchem das Zwischenerzeugnis ein durch Koextrusion mehrerer Schichten hergestellter Vorformling ist. Ein derartiger Vorformling und damit auch der aus ihm hergestellte Hohlkörper sind im allgemeinen aus wenigstens drei Schichten aufgebaut, von denen häufig eine als Tragschicht dienende Schicht aus einem Polyolefin besteht und wenigstens eine andere Schicht aus einem Material besteht, das Eigenschaften aufweist, die sich von denen des die Tragschicht bildenden Materials unterscheiden. Die dritte Schicht dient lediglich der Haftvermittlung zwischen den beiden erstgenannten Schichten, da es im allgemeinen nicht möglich ist, ohne dieses als dritte Schicht dienende Material die beiden ersten Schichten miteinander zu verbinden. Bei einem derartigen mittels Koextrusion hergestellten Zwischenerzeugnis bestehen bezüglich der Herstellung einer einwandfreien Schweißnaht, deren Stärke allen im praktischen Betrieb auftretenden Beanspruchungen des resultierenden Hohlkörpers genügt, im allgemeinen keine Schwierigkeiten, wenn die z.B. aus Polyäthylen bestehende Tragschicht innen angeordnet ist, da die für die Tragschicht in Frage kommenden Materialien normalerweise gute Schweißeigenschaften aufweisen. Hinzu kommt, daß die Dicke der Tragschicht durchwegs wesentlich größer ist als die der anderen Schichten, so daß unabhängig davon, ob die anderen Schichten an der Schweißnahtbildung mehr oder weniger stark beteiligt sind, allein die von der Tragschicht gebildete Schweißnaht in vielen Fällen allen praktischen Anforderungen genügt. Wenn jedoch die Tragschicht außen angeordnet ist, ergibt sich die unvermeidbare Konsequenz, daß beim Abquetsch- und Schweißvorgang einander gegenüberliegende Bereiche der anderen, nun innen angeordneten Schicht gegeneinander gedrückt und bei gleichzeitigem Abquetschen des überschüssigen Materials miteinander verschweißt werden. Diese andere Schicht besteht zumeist aus einem Material, welches eine Sperrwirkung hat, also das Hindurchdiffundieren von Bestandteilen des Füllgutes nach außen oder von Bestandteilen der umgebenden Atmosphäre in das Innere des Hohlkörpers verhindert. Sie ist jedoch im allgemeinen zu dünn, als daß sie selbst dann, wenn sie gute Schweißeigenschaften hat, die Herstellung einer Schweißnaht mit ausreichender Festigkeit ermöglicht. Entsprechendes gilt auch für die als Haftvermittler dienende Schicht. Die außen befindliche Tragschicht ist bei dieser Anordnung der Schichten an der Schweißnahtbildung nicht oder nur in unvollkommener Weise beteiligt, da zwischen den beiden einander gegenüberliegenden Bereichen der Tragschicht, die durch Schweißen miteinander zu verbinden wären, die anderen beiden Schichten, d.h., die Haftvermittlerschicht und die Sperrschicht, liegen und letztere aus den eingangs genannten Gründen mit dem die Tragschicht bildenden Material keine gute Schweißverbindung eingeht.

Aus der US-A-3 592 885 sind Verfahren und Vorrichtung der einleitend beschriebenen Art bekannt. Diese Veröffentlichung geht aus von einem schlauchartigen Zwischenerzeugnis, welches unterhalb der Temperatur verarbeitet wird, die zur Erzielung einer optimalen Schweißnaht erforderlich ist. Um trotzdem eine ausreichend feste Schweißnaht herzustellen, erhält diese einen etwa sägezahnartigen Verlauf. Die dazu benutzte Vorrichtung ist so ausgebildet, daß die Quetschbereiche der zweiteiligen Hohlform zumindest teilweise mit Vertiefungen und Vorsprüngen versehen sind derart, daß die zwischen zwei derartigen Quetschbereichen gebildete Schweißnaht wenigstens über einen Teilbereich ihrer Erstreckung einen etwa sägezahnartigen Verlauf aufweist. D.h., daß die Schweißnaht nicht mehr ausschließlich entlang der Trennfläche der Hohlform verläuft, sondern zumindest auf Teilen der Längserstreckung durch seitliches Abweichen von dieser Fläche eine Verlängerung erfährt, so daß demzufolge die spezifische Beanspruchung der Schweißnaht bei einer gegebenen Belastung derselben kleiner wird. Das bekannte Verfahren läßt jedoch die einleitend beschriebene Tatsache unberücksichtigt, daß es erforderlich ist, gleichzeitig mit dem Herstellen der Schweißnaht überschüssiges Material möglichst weitgehend abzutrennen. Es ist schwierig, dies entlang eines sägezahnartigen oder ähnlichen Verlaufs der Schweißnaht zu erreichen.

Demzufolge liegt die Erfindung die Aufgabe zugrunde, Verfahren und Vorrichtung der einleitend beschriebenen Art so zu verbessern, daß die vorerwähnten Nachteile vermieden werden. Allgemein wird unabhängig davon, ob das Zwischenerzeugnis aus einer Schicht oder aus mehreren Schichten unterschiedlichen Materials besteht, angestrebt, unter allen in der Praxis in Betracht kommenden Bedingungen eine Schweißnaht herstellen zu können, die hohen Ansprüchen genügt, ohne daß dadurch das möglichst weitgehende Abquetschen des überschüssigen Materials eine wesentliche Erschwerung erfährt. Dies soll unabhängig davon gelten, ob die Schweißnaht, wie in der Mehrzahl der Fälle, dazu dient, das Zwischenerzeugnis an einem Ende zu verschließen, oder ob bei komplizierter Gestaltung des herzustellenden Hohlkörpers auch an anderen Bereichen desselben bzw. den entsprechenden Bereichen des Zwischenerzeugnisses überschüssiges Material abgequetscht wird, wobei gleichzeitig an den Abquetschstellen Zwischenerzeugnis bzw. daraus herzustellender Hohlkörper mittels einer Schweißnaht wieder zu verschließen sind. Die Mittel zur Lösung der Aufgabe sollen einfach und gegebenenfalls auch nachträglich anbringbar sein. Der Verfahrensablauf soll durch Anwendung der Erfindung keine oder zumindest keine nennenswerte Verzögerung erfahren.

Zur Lösung dieser Aufgabe schlägt die Erfindung vor, daß der Abquetschvorgang zum Abquetschen überschüssigen Materials an der dem Hohlkörper abgekehrten Seite des sägezahnartigen Bereichs der Schweißnaht entlang dem Verlauf der Trennfläche zwischen den beiden relativ zueinander bewegbaren Hohlformteilen erfolgt.

Vorteilhaft wird das Abfallmaterial in einem Abstand von der dem Hohlkörper abgekehrten Begrenzung des sägezahnartigen Bereichs der Schweißnaht abgequetscht, so daß sich letzterer an seiner dem Hohlkörper abgekehrten Seite in einen Steg fortsetzt, dessen Längsverlauf dem Verlauf der Trennfläche zwischen den beiden relativ zueinander bewegbaren Formteilen entspricht. Die beiden Schweißnahtbereiche, also jener, der durch die Abquetschkanten der Formteile bewirkt wird, und der sägezahnförmige Schweißnahtbereich gehen normalerweise ineinander über, so daß sie schweiß- oder verbindungstechnisch eine Einheit darstellen, wobei jedoch der sägezahnartig verlaufende Teil für die Festigkeit der Schweißnaht von besonderer Bedeutung ist.

Die Schweißnaht kann etwa zick-zack-förmig und symmetrisch zur Trennfläche der Hohlform geformt werden. Ferner kann die Schweißnaht nur über einen Teil ihrer Längserstreckung eine Verformung zur Bildung eines sägezahnartigen Verlaufs erfahren, und zwar vorzugsweise im mittleren Bereich ihres Längsverlaufs. Das Ausmaß der seitlichen Abweichung von der Trennfläche wird von der Größe des Hohlkörpers abhängen, normalerweise jedoch nicht mehr als einige Millimeter betragen. Dies reicht jedoch zur Erzielung des angestrebten Effektes aus. Der für die Anwendung der Erfindung erforderliche Mehraufwand besteht letzten Endes nur darin, daß die Quetschbereiche der zusammenwirkenden Hohlformteile mit einer entsprechenden sägezahnartig profilierten Oberfläche versehen sein müssen. Es ist aber auch möglich, die Schweißnaht lediglich nach einer Seite hin von der Trennfläche der Hohlform abweichen zu lassen oder nach einer Seite der Trennfläche stärker abweichen zu lassen als zur anderen Seite. Dies wird von den jeweiligen Gegebenheiten abhängen.

Zur Durchführung des vorbeschriebenen Verfahrens kann eine zwei- oder mehrteilige Hohlform mit einem Formnest und Mitteln zum Bewirken eines inneren Überdruckes im in der Hohlform befindlichen Zwischenerzeugnis verwendet werden, wobei die Hohlformteile an Bereichen, an welchen am Zwischenerzeugnis eine Schweißnaht zur Verbindung zweier einander gegenüberliegender Wandbereiche zu bilden ist, paarweise zusammenwirkende Quetschbereiche aufweisen und die in Berührung mit dem Zwischenerzeugnis kommenden Oberflächen der Quetschbereiche zumindest teilweise mit Vertiefungen und/oder Vorsprüngen derart versehen sind, daß die zwischen zwei derartigen Quetschbereichen gebildete Schweißnaht am Zwischenerzeugnis und damit am fertigen Hohlkörper wenigstens über einen Teilbereich ihrer Längserstreckung einen etwa sägezahnartigen Verlauf aufweist. Diese Vorrichtung ist dadurch gekennzeichnet, daß an der dem Formnest abgekehrten Seite der mit Vertiefungen und/oder Vorsprüngen versehenen Quetschbereiche die zusammenwirkenden Formteile mit Abquetschkanten versehen sind, die entlang der Trennfläche der beiden Formteile verlaufen und zum Abquetschen von überschüssigem Material dienen.

Dabei können beide einander gegenüberliegenden und zur Bildung der sägezahnartigen Schweißnaht zusammenwirkenden Quetschbereiche der Hohlformteile mit einer Zahnung versehen sein. Ferner kann es zweckmäßig sein, die gegenüber den Abquetschkanten jeweils in Richtung auf das andere Formteil vorspringenden Zähne an ihrer der jeweiligen Abquetschkante zugekehrten Begrenzungsfläche derart abzuschrägen, daß ihre Stärke in Richtung auf das jeweils andere Formteil abnimmt. Auch können die Abquetschkanten sich in einem Abstand von der dem Formnest abgekehrten Seite der jeweils zugehörigen mit Vertiefungen und/oder Vorsprüngen versehenen Quetschbereiche befinden.

Der unter Anwendung des Verfahrens und der Vorrichtung gemäß der Erfindung hergestellte Hohlkörper aus thermoplastischem Material, der mit wenigstens einer Abquetsch-Schweißnaht versehen ist, entlang welcher einander gegenüberliegende Wandbereiche des Hohlkörpers mittels Schweißen miteinander verbunden sind und überschüssiges Material abgequetscht worden ist, ist dadurch gekennzeichnet, daß an der dem Hohlkörper inneren abgekehrten Seite der sägezahnartig geformte Schweißnaht-Bereich in einen Steg übergeht, dessen Verlauf dem der Trennfläche der beiden Formteile entspricht. Dieser Steg kann symmetrisch zum sägezahnartigen Bereich der Schweißnaht verlaufen.

Die bei Anwendung der Lehre gemäß der Erfindung erzielbaren Vorteile kommen insbesondere bei solchen Zwischenerzeugnissen und daraus hergestellten Hohlkörpern zur Geltung, die aus wenigstens zwei Schichten aus unterschiedlichen Materialien bestehen. Wenn der Hohlkörper aus wenigstens drei Schichten aufgebaut ist, von denen eine als Tragschicht und eine andere, dünnere Schicht als Sperrschicht dient, kann die Sperrschicht innen angeordnet sein.

Aufgrund der Tatsache, daß die Abquetschnaht in der Trennfläche der zusammenwirkenden Hohlformteile, in der Mehrzahl der Anwendungsfälle also in einer Ebene verläuft, ist das Abtrennen des Überschußmaterials nicht schwieriger als bei bekannten Verfahren.

In der Zeichnung ist ein Ausführungsbeispiel der Erfindung dargestellt. Es zeigen:

Fig. 1 im Schema einen Ausschnitt aus einer zweiteiligen, geöffneten Hohlform mit zwischen den Formhälften befindlichem dreischichtigem, schlauchförmigem Vorformling im Längsschnitt,

Fig. 2 einen Ausschnitt aus dem Quetschbereich einer Hohlformhälfte in perspektivischer und auseinandergezogener Darstellung der Teile,

Fig. 3 einen Schnitt nach der Linie III–III der Fig. 1,

Fig. 4 eine der Fig. 3 entsprechende Darstellung mit den beiden Hohlformhälften in einer Zwischenposition während des Schließvorganges,

Fig. 5 eine der Fig. 1 entsprechende Darstellung unmittelbar vor Abschluß der Schließbewegung beider Formhälften,

Fig. 6 einen Schnitt nach der Linie VI-VI der Fig. 5,

Fig. 7 einen Ausschnitt aus dem Quetschbereich der Hohlform in geschlossener Stellung der Hohlformteile, jedoch ohne Vorformling bzw. Hohlkörper,

Fig. 8 einen Querschnitt durch den Boden eines Hohlkörpers mit daran befindlicher Schweißnaht gemäß Schnitt VIII-VIII der Fig. 9,

Fig. 9 einen Schnitt nach der Linie IX-IX der Fig. 8,

Fig. 10 eine der Fig. 8 entsprechende Darstellung der Schweißnaht an einem Hohlkörper, dessen Wandung jedoch nur aus einer Schicht besteht.

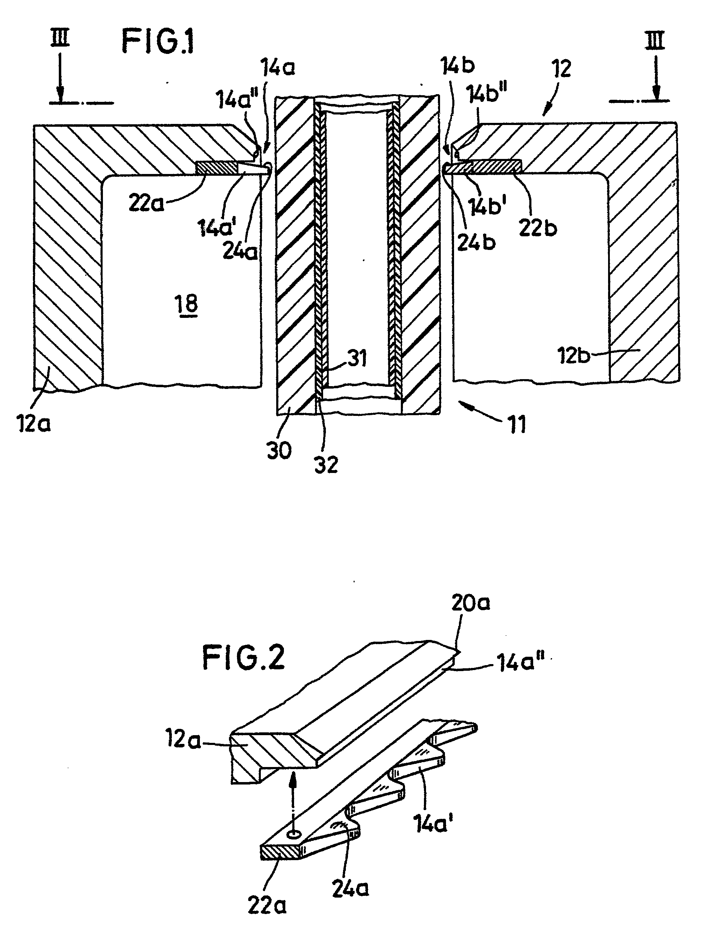

Die Figuren 1 sowie 3 bis 6 zeigen eine Hohlform, wie sie, abgesehen von der Ausgestaltung Quetschbereiches, allgemein im Blasverfahren verwendet wird.

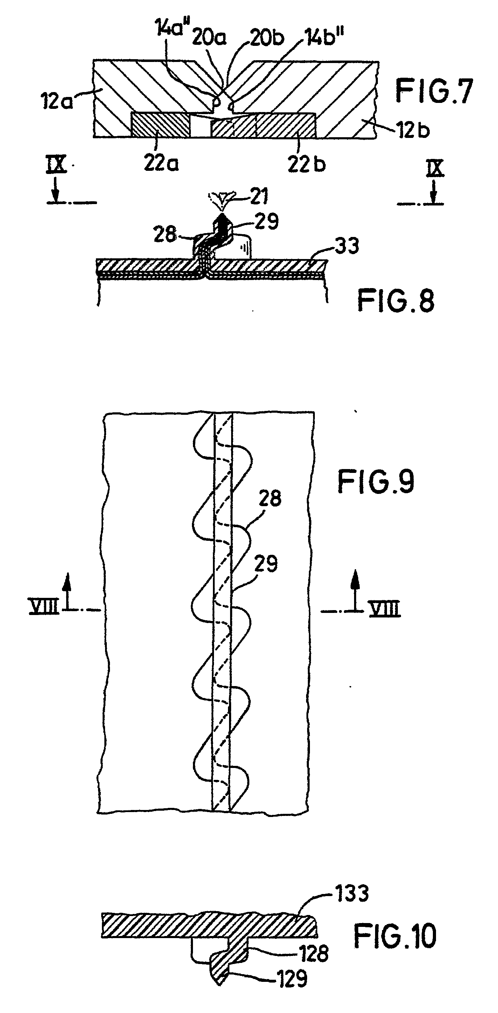

Ein Zwischenerzeugnis in Gestalt eines schlauchförmigen Vorformlings 11, der auf einer in der Zeichnung nicht dargestellten Extrusions-Einrichtung hergestellt worden ist, wird von einer zweiteiligen Hohlform 12 aufgenommen, deren beide Hälften 12a, 12b in Fig. 1 in der Offenstellung dargestellt sind. Die beiden Formhälften 12a und 12b sind mit Quetschbereichen 14a, 14b versehen, die dem Boden 33 (Fig. 8) des in der Hohlform 12 aus dem Vorformling 11 herzustellenden Hohlkörpers zugeordnet sind. D. h., daß sich bei dem in Fig. 1 - 8 dargestellten Ausführungsbeispiel der fertige Hohlkörper aus dem Kopf stehend in der Hohlform 12 befindet. Dies ist jedoch für die Anwendung der Lehre gemäß der erfindung keine Voraussetzung. Vielmehr kann der Hohlkörper beispielsweise eine Flasche, ein Kanister oder dgl., auch aufrechtstehend in der Hohlform 12 hergestellt werden.

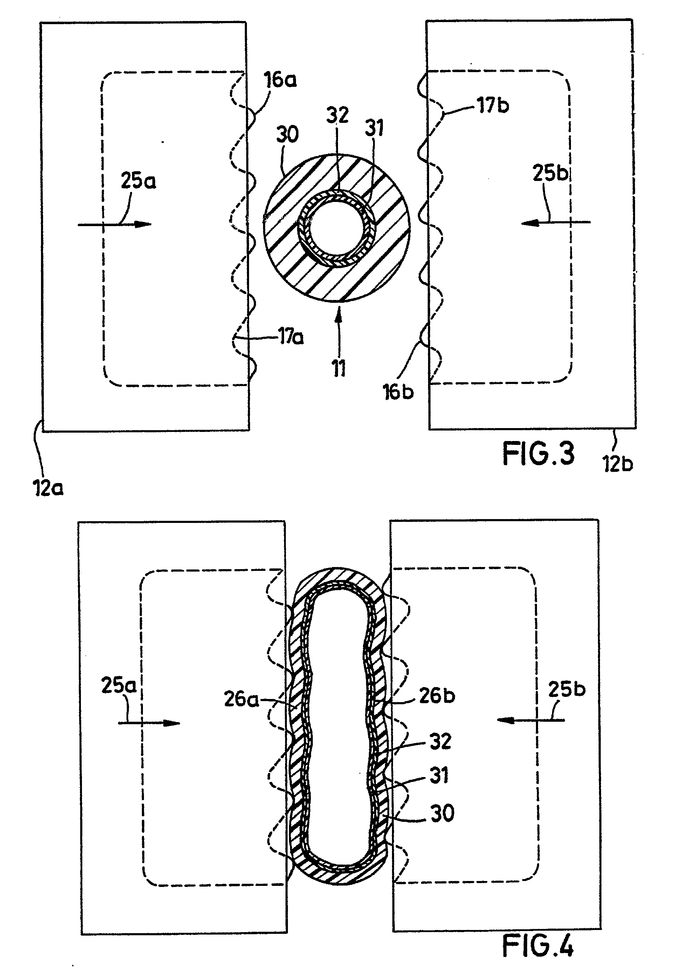

Jeder der beiden Quetschbereiche 14a, 14b besteht aus zwei Teilbereichen 14a' und 14a" bzw. 14b' und 14b". Die Ausgestaltung dieser Bereiche ist insbesondere in Fig. 2 zu erkennen, welche die Bereiche 14a' und 14a" in auseinandergezogener Position darstellt. Die Bereiche 14a' und 14b' sind an ihren einander zugekehrten Seiten sägezahnartig ausgebildet und derart einander zugeordnet (Fig. 3, 4 und 6), daß die Vorsprünge 16a bzw. 16b der einen Formhälfte 12a bzw. 12b etwa den Ausnehmungen jeweils der anderen. Formhälfte gegenüberliegen, wie dies die Figuren 3, 4 und 6 erkennen lassen. Die Teilbereiche 14a bzw. 14b sind oberseitig, also entlang ihrer dem Formnest 18 abgekehrten Seite, jedoch mit einer Abquetschkante 20a, 20b versehen. Diese Kanten dienen dazu, überschüssiges Material 21 vom Vorformling 11 bzw. dem daraus herzustellenden Hohlkörper abzuquetschen. In der Zeichnung sind die Abquetschkanten 20a, 20b mehr oder weniger scharfkantig dargestellt. Es ist auch möglich, die Kanten etwas abzuflachen, also stumpf auszubilden. In jedem Fall wird das Abfallteil 21 über einen dünnen Film oder Steg mit dem Hohlkörper verbunden bleiben. Dieser Film oder Steg ist jedoch so dünn, daß normalerweise das Abfallstück vom Hohlkörper ohne Schneidvorgänge abgerissen werden kann.

Bei dem in der Zeichnung dargestellten Ausführungsbeispiel sind die beiden sägezahnförmig ausgebildeten Quetsch-Teilbereiche 14a', 14b' von plattenförmigen Einsätzen 22a, 22b getragen, die so in der das Formnest 18 begrenzenden Wandung der jeweiligen Formhälfte 12a bzw. 12b angebracht sind, daß die sägezahnförmigen Quetsch-Teilbereiche 14a', 14b' innenseitig an die Quetsch-Teilbereiche 14a" und 14b" anschließen, die durch die Abquetschkanten 20a bzw. 20b begrenzt sind. Dabei ist, wie insbesondere Fig. 1 und 7 erkennen lassen, jeweils die dem Formnest 18 abgekehrte Begrenzungsfläche, bei dem in der Zeichnung dargestellten Ausführungsbeispiel somit die obere, der jeweils zugehörigen Abquetschkante 20a, 20b zugekehrte Begrenzungsfläche 24a, 24b im sägezahnförmig ausgebildeten Bereich abgeschrägt derart, daß in Schließrichtung 25a bzw. 25b der jeweils zugehörigen Formhälfte 12a bzw. 12b der Abstand von der jeweils zugehörigen Abquetschkante 20a bzw. 20b zunimmt. Dadurch wird zwischen oberer Begrenzungsfläche 24a bzw. 24b sowie Abquetschkanten 20a, 20b zusätzlich Raum geschaffen, in welchen bei der Schweißnahtbildung in der letzten Phase des Schließens der Hohlform 12 zusätzliches thermoplastisches Material eindringen kann, welches an der Schweißnahtbildung teilnimmt und diese somit verstärkt. Außerdem wird dadurch die Bildung scharfer Übergänge an der Schweißnaht verhindert.

Im Zuge der von den beiden Formhälften 12a, 12b in Richtung der Pfeile 25a bzw. 25b ausgeführten Schließbewegung wird der Abschnitt des Vorformlinges 11, der sich zwischen den beiden Quetschbereichen 14a, 14b befindet, zunächst flachgedrückt, wie dies die ein Zwischenstadium der Schließbewegung darstellende Fig. 4 zeigt. Dabei kann der Vorformling 11 durch inneren Überdruck bereits während des Schließvorganges etwas voraufgeweitet sein, damit sich die beiden gegenüberliegenden Wandbereiche, die im Zuge der weiteren Schließbewegung miteinander zu verschweißen sind, über zumindest den größten Teil der Länge der Quetschbereiche 14a, 14b und somit der entsprechenden Abmessung des Hohlkörperbodens erstrecken.

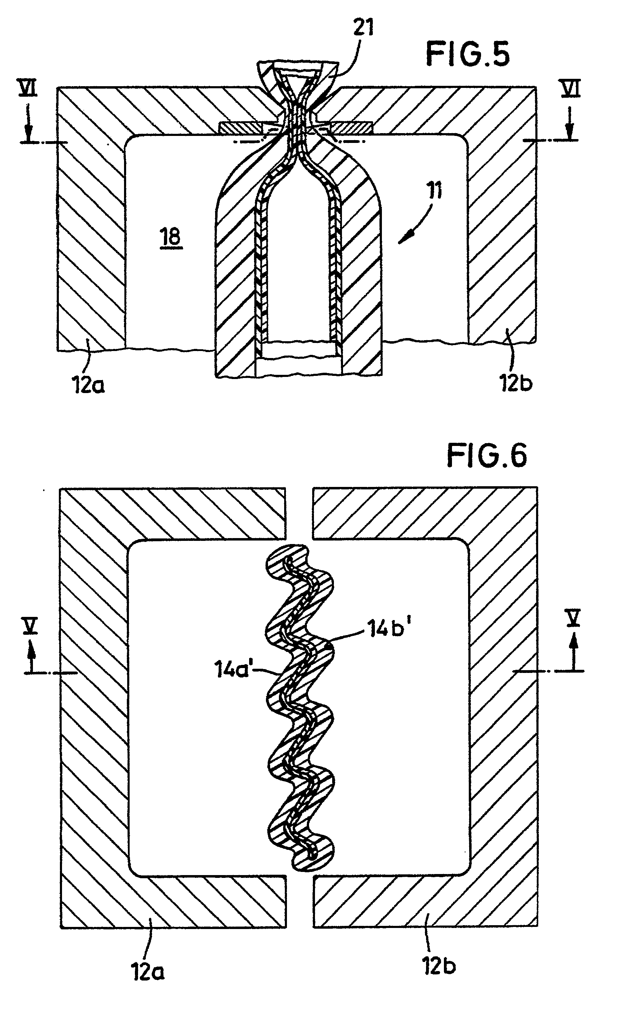

Im Zuge der weiteren Schließbewegung kommen die sägezahnförmig begrenzten Quetsch-Teilbereiche 14a', 14b', deren Vorsprünge 16a, 16b und Ausnehmungen 17a, 17b in einer Ebene im wesentlichen senkrecht zur Längsachses des Vorformlinges 11 verlaufen, mit den beiden einander gegenüberliegenden Wandbereichen 26a, 26b in Eingriff, wie dies in den Figuren 5 und 6 dargstellt ist. Dabei erfährt der zwischen den sägezahnförmigen Quetsch-Teilbereichen 14a', 14b' befindliche Abschnitt des Vorformlinges 11 eine entsprechende, ebenfalls sägezahnartige Formgebung, wobei die beiden einander gegenüberliegenden Wandbereiche 26a, 26b des Vorformlinges 11 unter Bildung einer sägezahnartig verlaufenden Schweißnaht zwischen den beiden Quetsch-Teilbereichen 14a und 14b miteinander verbunden werden.

Fig. 5 der Zeichnung läßt erkennen, daß in jener Phase des Schließvorganges, in welcher die einander gegenüberliegenden sägezahnartigen Quetsch-Teilbereiche 14a', 14b' bzw. deren Vorsprünge 16a, 16b und Ausnehmungen 17a, 17b unter Bildung der Schweißnaht 28 beginnen, miteinander in Eingriff zu kommen, die parallel zur Teilungsfläche der Hohlform 12 verlaufenden Quetsch-Teilbereiche 14a'' und 14b'' noch einen Abstand voneinander aufweisen, so daß die Bildung der zwischen diesen Quetsch-Teilbereichen entstehenden, ebenfalls parallel zur Teilungsebene der Form verlaufenden, linearen Schweißnaht 29 (Fig. 8 und 9) erst in der letzten Phase des Schließvorganges erfolgt, wobei dabei gleichzeitig das bereits erwähnte Überschußmaterial 21 durch die Abquetschkanten 20a, 20b abgequetscht wird.

Da die Abquetschkanten 20a, 20b in einem Abstand von den sägezahnförmig ausgebildeten Quetschbereichen 14a', 14b' angeordnet sind, wodurch die vorerwähnten Quetsch-Teilbereiche 14a'', 14b'' entstehen, wird somit im Ergebnis eine Schweißnaht gebildet, die aus zwei Teilbereichen 28 und 29 besteht, wobei der etwa leistenförmig oder stegartige Teilbereich 29 in der üblichen Weise parallel zur Teilungsfläche der Hohlform verläuft, die bei dem in der Zeichnung dargestellten Ausführungsbeispiel eine Ebene ist, wenngleich dies nicht immer der Fall zu sein braucht. Der andere, daran anschließende Bereich 28 verläuft sägezahn oder zick-zack-förmig, wodurch einmal eine zusätzliche, in gewisser Weise sogar formschlüssige Verbindung zwischen den beiden miteinander zu verbindenden Wandbereichen 26a, 26b erzielt wird. Hinzu kommt, daß durch den sägezahnförmigen Verlauf die Naht länger wird und damit im Fall einer mechanischen Beanspruchung die spezifische Belastung abnimmt.

Bei dem in den Figuren 1 sowie 3 bis 6 und 8 dargestellten Ausführungsbeispiel besteht der Vorformling 11 aus drei Schichten: Der äußeren Tragschicht 30, einer inneren Schicht 31 aus anderem Material sowie einer dazwischen befindlichen Schicht 32, die als Haftvermittlerschicht dient, damit die beiden Schichten 30 und 31, die aus miteinander nicht verschweißbaren Materialien bestehen, eine feste Verbindung miteinander eingehen. Wenngleich die Darstellungen in der Zeichnung bezüglich der Dicke der einzelnen Schichten nicht maßstäblich sind, wird im Normalfall die Tragschicht 30, bei der es sich z. B. um eines der üblichen Polyolefine handelt, immer wesentlich dicker sein als die beiden anderen Schichten, da die Schicht 30 die mechanische Festigkeit des herzustellenden Hohlkörpers bestimmt. Die Qualität des letzteren hängt weitgehend von der Beschaffenheit der Schweißnaht ab, die z. B. bei den in der Zeichnung dargestellten Ausführungsbeispielen im Bereich des Bodens des Hohlkörpers entsteht. Maßgeblich für die Qualität der Schweißnaht sind die beiden Schichten der einander gegenüberliegenden Wandbereiche 26a und 26b, die miteinander verschweißt werden. Wenn - im Gegensatz zu dem Ausführungsbeispiel gemäß Fig. 1 sowie den Figuren 3 bis 6 und 8 - die Tragschicht 30 innen angeordnet ist, bereitet es im allgemeinen keine Schwierigkeiten, eine gute Schweißnaht zu erzielen, da die Tragschicht eine ausreichende Wandstärke aufweist. Wenn hingegen, wie im Falle des in den vorgenannten Figuren dargestellten Ausführungsbeispiels die dünne Sperrschicht innen angeordnet ist, kommen beim Gegeneinanderpressen der beiden einander gegenüberliegenden Wandbereiche 26a, 26b des Vorformlings die entsprechenden Wandbereiche der innen liegenden Sperrschicht 31 zur Anlage aneinander. Die dabei entstehende Schweißnaht ist hinsichtlich ihrer Dicke bestimmt durch die Dicke der Sperrschicht 31. Aufgrund der Tatsache, daß das Material der ausreichend dicken -Tragschicht 30 einerseits und das Material der inneren Sperrschicht 31 andererseits sich aufgrund ihrer unter-schiedlichen Eigenschaften nicht oder nur schlecht miteinander verschweißen lassen, trägt das Material der Tragschicht 30 zur Bildung einer Schweißnaht oder zur Festigkeit derselben kaum etwas bei. Somit muß die Schweißnaht so ausgeführt sein, daß trotz der geringen Dicke der Schicht 31 die entstehende Schweißverbindung eine ausreichende mechanische Festigkeit aufweist. Dies wird durch die Erfindung, also im wesentlichen durch die sägezahnförmige Ausgestaltung der Schweißnaht zumindest über einen Teil ihrer Länge erreicht.

Die Erfindung ist aber auch dann mit Nutzen anwendbar, wenn die Tragschicht innen angeordnet ist oder der Vorformling gemäß dem in Fig. 10 dargestellten Ausführungsbeispiel nur aus einer Schicht desselben Materials besteht. In jedem Fall wird eine Schweißnaht mit merklich besserer Qualität hergestellt, so daß an den Hohlkörper größere Anforderungen bezüglich seiner mechanischen Festigkeit gestellt werden können. Dies ist insbesondere bei Transportbehältern, z. B. bei Fässern wichtig, die während des Transportes erheblichen Beanspruchungen ausgesetzt sind.

In Fig. 10, in welcher der Boden eines aufrechtstehenden Hohlkörpers dargestellt ist, sind mit der Ausführungsform gemäß Fig. 8 übereinstimmende Teile mit gleichen, jedoch jeweils um 100 höheren Bezugszeichen versehen. In beiden Fällen ist der Boden 33 bzw. 133 des Hohlkörpers eingezogen, so daß, wie auch sonst üblich, die etwas vorstehende Schweißnaht sich innerhalb der Einziehung befindet.

Bei den vorstehend beschriebenen Ausführungsbeispiel wird davon ausgegangen, daß die Länge der zick-zack-förmigen Schweißnahtbereiches der Länge der gesamten Schweißnaht entspricht. Dies ist jedoch nicht in allen Fällen erforderlich. So wird es vielfache möglich sein, bei einer beispielsweise am Boden eines Hohlkörpers anzubringenden Schweißnaht nur den mittleren Bereich derselben sägezahnoder zick-zack-förmig auszubilden und die daran nach beiden Seiten anschließenden Bereiche nur mit der üblichen, in der Teilungsfläche der Form verlaufenden Schweißnaht 29 bzw. 129 zu versehen. Dies wird insbesondere dann möglich sein, wenn die an den zick-zack-förmigen Abschnitt anschließenden Endbereiche der Schweißnaht sich am Übergang vom Boden eines Hohlkörpers zu den Seitenwänden befinden, weil dort in vielen Fällen eine Materialanhäufung im Sinne einer Vergrößerung der Wandstärke eintritt, so daß die sich in diesen Bereichen bildende Schweißnaht ohnehin eine größere Festigkeit aufweist.

Wenngleich bei den vorstehend beschriebenen Ausführungsbeispielen immer von der Schweißnaht am Boden eines Hohlkörpers die Rede war, ist die Erfindung keineswegs auf diese Ausführungsform beschränkt. Vielmehr ist es ohne weiteres möglich, auch an anderen Bereichen des Hohlkörpers, an denen eine Schweißnaht anzubringen ist, die Lehre gemäß der Erfindung anzuwenden. Dies gilt z. B. für mit einem Griff versehene Flaschen, bei denen es im allgemeinen erforderlich ist, im Bereich des Griffes Material abzuquetschen und gleichzeitig eine Schweißnaht herzustellen. Andere Anwendungsfälle betreffen kompliziert geformte Hohlkörper, wie beispielsweise Kraftstofftanks für Kraftfahrzeuge.

### Patentansprüche

1. Verfahren zum Herstellen von Hohlkörpern aus thermoplastischem Material, bei welchem ein warmplastisches, schlauch- oder beutelartiges Zwischenerzeugnis (11) in einer mit einem Formnest (18) und entlang Randbereichen desselben verlaufenden Quetschbereichen (14a, 14b) versehenen, zwei- oder mehrteiligen Hohlform (12) durch inneren Überdruck aufgeweitet wird und beim Schließen der Hohlform (12) wenigstens zwei Wandbereiche (26a, 26b) des Zwischenerzeugnisses (11) paarweise durch die zusammenwirkenden Quetschbereiche (14a, 14b) der sich in Schließrichtung relativ zueinander bewegenden Hohlformteile (12a, 12b) in eine Lage gebracht werden, in der sie zwischen den Quetschbereichen (14a, 14b) einander gegenüberliegen und parallel zur Trennfläche der Hohlformteile (12a, 12b) verlaufen, von den Quetschbereichen gegeneinander gedrückt und unter Bildung einer Schweißnaht miteinander verschweißt werden, wobei zugleich Abfallmaterial (21) durch die zusammenwirkenden Quetschbereiche abgequetscht werden kann und die einander gegenüberliegenden und miteinander zu verschweißenden Wandbereiche (26a, 26b) bei der Bildung der Schweißnaht eine zusätzliche Verformung erfahren derart, daß ein Teilbereich (28) der Schweißnaht einen sägezahnartigen Verlauf erhält, dadurch gekennzeichnet, daß der Abquetschvorgang zum Abquetschen überschüssigen Materials (21) an der dem Hohlkörper abgekehrten Seite des sägezahnartigen Bereichs (28) der Schweißnaht entlang dem Verlauf der Trennfläche zwischen den beiden relativ zueinander bewegbaren Hohlformteilen (12a, 12b) erfolgt.

2. Verfahren nach Anspruch 1, dadurch gekennzeichnet, daß das Abfallmaterial (21) in einem Abstand von der dem Hohlkörper abgekehrten Begrenzung des sägezahnartigen Bereichs (28) der Schweißnaht abgequetscht wird, so daß sich dieser Bereich (28) an seiner dem Hohlkörper abgekehrten Seite in einen Steg (29) fortsetzt, dessen Längsverlauf dem Verlauf der Trennfläche zwischen den beiden relativ zueinander bewegbaren Formteilen (12a, 12b) entspricht.

3. Verfahren nach Anspruch 1, dadurch gekennzeichnet, daß die Schweißnaht (28) etwa zick-zackförmig und symmetrisch zur Trennfläche der Hohlform (12) geformt wird.

4. Verfahren nach Anspruch 1, dadurch gekennzeichnet, daß die Schweißnaht (28) nur über einen Teil ihrer Längserstreckung eine Verformung zur Bildung eines sägezahnartigen Verlaufs erfährt.

5. Verfahren nach Anspruch 4, dadurch gekennzeichnet, daß die Schweißnaht (28) im mittleren Bereich ihres Längsverlaufs eine Verformung zur Bildung eines sägezahnartigen Verlaufs erfährt.

6. Verfahren nach Anspruch 1, dadurch gekennzeichnet, daß das Zwischenerzeugnis (11) wenigstens zwei Schichten aufweist, die aus unterschiedlichen Materialien bestehen.

7. Vorrichtung zum Herstellen von Hohlkörpern aus thermoplastischem Material im Blasverfahren mit einer zwei- oder mehrteiligen Hohlform (12) mit einem Formnest und Mitteln zum Bewirken eines inneren Überdrucks im in der Hohlform (12) befindlichen Zwischenerzeugnis, wobei die Hohlformteile an Bereichen, an welchen am Zwischenerzeugnis (11) eine Schweißnaht zur Verbindung zweier einander gegenüberliegender Wandbereiche zu bilden ist, paarweise zusammenwirkende Quetschbereiche (14a, 14b) aufweist und die in Berührung mit dem Zwischenerzeugnis (11) kommenden Oberflächen der Quetschbereiche (14a, 14b) zumindest teilweise mit Vertiefungen (17a, 17b) und/oder Vorsprüngen (16a, 16b) derart versehen sind, daß die zwischen zwei derartigen Quetschbereichen (14a', 14b') gebildete Schweißnaht (28) am Zwischenerzeugnis und damit am fertigen Hohlkörper wenigstens über einen Teilbereich ihrer Längserstreckung einen etwa sägezahnartigen Verlauf aufweist, dadurch gekennzeichnet, daß an der dem Formnest (10) abgekehrten Seite der mit Vertiefungen (17a, 17b) und/oder Vorsprüngen (16a, 16b) versehenen Quetschbereiche (14a, 14b) die zusammenwirkenden Formteile (12a, 12b) mit Abquetschkanten (20a, 20b) versehen sind, die entlang der Trennfläche der beiden Formteile (12a, 12b) verlaufen und zum Abquetschen von überschüssigem Material (21) dienen.

8. Vorrichtung nach Anspruch 7, dadurch gekennzeichnet, daß beide einander gegenüberliegenden und zur Bildung der sägezahnartigen Schweißnaht (28) zusammenwirkenden Quetschbereiche (14a', 14b') der Hohlformteile (12a, 12b) mit einer Zahnung versehen sind.

9. Vorrichtung nach Anspruch 7, dadurch gekennzeichnet, daß die gegenüber den Abquetschkanten (20a, 20b) jeweils in Richtung auf das andere Formteil (12a, 12b) vorspringenden Zähne (16a, 16b) an ihrer der jeweiligen Abquetschkante (20a, 20b) zugekehrten Begrenzungsfläche (24a, 24b) derart abgeschrägt sind, daß ihre Stärke in Richtung auf das jeweils andere Formteil (12a, 12b) abnimmt.

10. Vorrichtung nach Anspruch 7, dadurch gekennzeichnet, daß die Abquetschkanten (20a, 20b) sich in einem Abstand von der dem Formnest (10) abgekehrten Seite der jeweils zugehörigen mit Vertiefungen (17a, 17b) und/oder Vorsprüngen (16a, 16b) versehenen Quetschbereiche (14a, 14b) befinden.

11. Im Blasverfahren aus einem schlauch- oder beutelartigen Zwischenerzeugnis aus thermoplastischem Material hergestellter Hohlkörper, der mit wenigstens einer Abquetsch-Schweißnaht versehen ist, entlang welcher einander gegenüberliegende Wandbereiche des Hohlkörpers mittels Schweißen miteinander verbunden sind und überschüssiges Material abgequetscht worden ist, dadurch gekennzeichnet, daß an der dem Hohlkörperinneren abgekehrten Seite der sägezahnartig geformte Schweißnaht-Bereich (28) in einen Steg (29) übergeht, dessen Verlauf dem der Trennfläche der beiden Formteile (12a, 12b) entspricht.

12. Hohlkörper nach Anspruch 11, dadurch gekennzeichnet, daß der Steg (29) symmetrisch zum sägezahnartigen Bereich der Schweißnaht verläuft.

13. Hohlkörper nach Anspruch 11, dadurch gekennzeichnet, daß seine Wandung aus wenigstens zwei Schichten unterschiedlicher Materialien besteht.

14. Hohlkörper nach Anspruch 13, der aus wenigstens drei Schichten aufgebaut ist, von denen eine als Tragschicht und eine andere, dünnere Schicht als Sperrschicht dient, dadurch gekennzeichnet, daß die Sperrschicht (31) innen angeordnet ist.

**Claims**

1. A process for the production of hollow bodies of thermoplastic material wherein a thermoplastic tubular or bag-like parison (11) is expanded by an internal pressure in a hollow mould (12) comprising two or more mould portions and provided with a mould cavity (18) and squeeze regions (14a, 14b) extending along edge regions of the mould cavity and when the hollow mould (12) is closed at least two wall regions (26a, 26b) of the parison (11) are moved in pairs by the co-operating squeeze regions (14a, 14b) of the hollow mould portions (12a, 12b) which move relative to each other in the closing direction, into a position in which they are disposed in mutually opposite relationship between the squeeze regions (14a, 14b) and extend parallel to the separation surface of the hollow mould portions (12a, 12b) and are pressed towards each other by the squeeze regions and are welded together with the formation of a welded seam wherein at the same time waste material (21) can be squeezed away by the co-operating squeeze regions and the wall regions (26a, 26b) which are in mutually opposite relationship and which are to be welded together, in the step of forming the welded seam, are subjected to additional deformation such that a portion (28) of the welded seam receives a sawtooth-like configuration, characterised in that the squeeze operation for squeezing away excess material (21) occurs, at the side of the sawtooth-like region of the welded seam which is remote from the hollow body, along the path of the separation surface between the two hollow mould portions (12a, 12b) which are movable relative to each other.

2. A process according to claim 1, characterised in that the waste material (21) is squeezed away at a spacing from the boundary, which is remote from the hollow body, of the sawtooth-like region (28) of the welded seam, so that said region (28) is extended at its side remote from the hollow body into a web portion (29) whose longitudinal configuration corresponds to the configuration of the separation surface between the two mould portions (12a, 12b) which are movable relative to each other.

3. A process according to claim 1, characterised in that the welded seam (28) is formed in a substantially zig-zag configuration and symmetrically with respect to the separation surface of the hollow mould (12).

4. A process according to claim 1, characterised in that the welded seam (28) is subjected to deformation to form a sawtooth-like configuration, only over a portion of the longitudinal extent of the seam.

5. A process according to claim 4, characterised in that the welded seam (28) is subjected to deformation to form a sawtooth-like configuration in the middle region of the longitudinal extend of the seam.

6. A process according to claim 1, characterised in that the parison (11) has at least two layers which comprise different materials.

7. Apparatus for producing hollow bodies of thermoplastic material by a blow-moulding process comprising a hollow mould (12) which is in two or more portions, with a mould cavity and means for producing an increased internal pressure in the parison disposed in the hollow mould (12), wherein at regions at which a welded seam is to be formed on the parison (11) for connecting two mutually oppositely disposed wall regions, the hollow mould portions have squeeze regions (14a, 14b) which co-operate in a pair-wise manner and the surfaces of the squeeze regions (14a, 14b), which come into contact with the parison (11), are at least partially provided with depressions (17a, 17b) and/or projections (16a, 16b) in such a way that the welded seam (28) formed between two such squeeze regions (14a`, 14b`) on the parison and thus on the finished hollow body is of a substantially sawtooth-like configuration at least over a portion of the longitudinal extent of the seam, characterised in that at the side, which is remote from the mould cavity (10), of the squeeze regions (14a, 14b) which are provided with depressions (17a, 17b) and/or projections (16a, 16b), the co-operating mould portions (12a, 12b) are provided with squeeze-off edges (20a, 20b) which extend along the separation surface of the two mould portions (12a, 12b) and which serve for squeezing off excess material (21).

8. Apparatus according to claim 7, characterised in that both mutually oppositely disposed squeeze regions (14a`, 14b`) of the hollow mould portions (12a, 12b), which squeeze regions co-operate to form the sawtooth-like welded seam (28), are provided with a tooth configuration.

9. Apparatus according to claim 7, characterised in that the teeth (16a, 16b) which project with respect to the squeeze-off edges (20a, 20b) towards the respective other mould portion (12a, 12b) are bevelled at their boundary surface (24a, 24b) which is towards the respective squeeze-off edge (20a, 20b), in such a way that the thickness thereof decreases towards the respective other mould portion (12a, 12b).

10. Apparatus according to claim 7, characterised in that the squeeze-off edges (20a, 20b) are disposed at a spacing from the side remote from the mould cavity (10) of the respectively associated squeeze regions (14a, 14b) which are provided with depressions (17a, 17b) and/or projections (16a, 16b).

11. A hollow body which is produced by a blow moulding process from a tubular or bag-like parison of thermoplastic material and which is provided with at least one squeeze-off welded seam along which mutually oppositely disposed wall regions of the hollow body are connected together by welding and excess material has been squeezed off, characterised in that at the side remote from the interior of the hollow body, the welded seam region (28) which is of a sawtooth-like configuration goes into a web portion (29) whose configuration corresponds to the separation surface of the two mould portions (12a, 12b).

12. A hollow body according to claim 11, characterised in that the web portion (29) extends symmetrically with respect to the sawtooth region of the welded seam.

13. A hollow body according to claim 11, characterised in that the wall thereof comprises at least two layers of different materials.

14. A hollow body according to claim 13 which is made up of at least three layers of which one serves as a carrier layer and another thinner layer serves as a barrier layer, characterised in that the barrier layer (31) is arranged at the inside.

## Revendications

1. Procédé pour fabriquer des corps creux en matière thermoplastique, à partir d'une ébauche (11) constituée par un produit intermédiaire en matière thermoplastique, en forme de tube ou de sac, que l'on place dans un moule creux (12) formé d'au moins deux parties et comportant une cavité de moulage (18) en bordure de laquelle sont prévues des zones d'écrasement (14a, 14b), pour assurer l'expansion de l'ébauche dans ce moule sous l'effet d'une surpression interne, le mouvement de fermeture du moule (12) provoquant le rapprochement d'au moins deux plages opposées (26a, 26b) de la paroi de l'ébauche (11), entraînées de manière conjuguée par les zones d'écrasement (14a, 14b) prévues sur les parties mobiles (12a, 12b) du moule, ces plages opposées de la paroi de l'ébauche se trouvant ainsi amenées l'une en regard de l'autre entre les zones d'écrasement (14a, 14b), parallèlement à la surface de séparation des parties (12a, 12b) du moule creux, pour y être comprimées l'une contre l'autre par les zones d'écrasement et fixées l'une à l'autre par un joint soudé, la matière en excès (21) pouvant en même temps être séparée par l'action conjuguée des zones d'écrasement, et les deux plages opposées (26a, 26b) de la paroi de l'ébauche, qu'il s'agit de fixer l'une à l'autre par un joint soudé, subissant une déformation supplémentaire au cours de la réalisation de ce joint, de telle manière qu'une partie (28) du joint soudé présente ensuite une forme en dents de scie, caractérisé en ce que l'opération d'écrasement servant à séparer la matière en excès (21) est réalisée du côté opposé au corps creux, sur la partie en dents de scie (28) du joint soudé, le long de la surface de séparation des deux parties (12a, 12b) du moule creux qui sont mobiles l'une par rapport à l'autre.

2. Procédé selon la revendication 1, caractérisé en ce que la matière en excès (21) subit un écrasement à une certaine distance de la limite de la zone en dents de scie (28) du joint soudé, à l'opposé du corps creux, de telle manière que la zone en question (28) se trouve prolongée, à l'endroit de sa bordure opposée au corps creux, par une nervure (29) dont la forme en longueur correspond à celle de la surface de séparation existant entre les deux parties (12a, 12b) du moule qui sont mobiles l'une par rapport à l'autre.

3. Procédé selon la revendication 1, caractérisé en ce qu'on donne au joint soudé (28) une forme sensiblement en zig-zag, symétrique par rapport à la surface de séparation du moule creux (12).

4. Procédé selon la revendication 1, caractérisé en ce qu'on donne au joint soudé une forme en zigzag seulement sur une partie de son étendue en longueur.

5. Procédé selon la revendication 4, caractérisé en ce qu'on donne au joint soudé (28) une forme en zig-zag dans la zone moyenne de son étendue en longueur.

6. Procédé selon la revendication 1, caractérisé en ce que l'ébauche (11) comporte au moins deux couches constituées de matières différentes.

7. Dispositif pour réaliser par soufflage des corps creux en matière thermoplastique, comportant un moule creux (12) composé d'au moins deux parties, définissant une cavité de moulage et associé à des moyens prévus pour produire un effet de surpression interne dans une ébauche (11) constituée par un produit intermédiaire et placée dans le moule creux (12), les parties mobiles du moule présentant des zones d'écrasement (14a, 14b) adaptées à coopérer en conjugaison l'une avec l'autre, aux endroits où doit être réalisé un joint soudé sur l'ébauche, pour relier l'une à l'autre deux parties contiguës de la paroi de l'ébauche, et les faces des zones d'écrasement (14a, 14b) ainsi prévues pour venir au contact de l'ébauche (11) présentant au moins en partie un ensemble d'évidements (17a, 17b) et/ou de saillies (16a, 16b), suivant un agencement tel que le joint soudé (28) ainsi réalisé sur l'ébauche et donc sur le corps creux sortant de fabrication, entre les deux zones d'écrasement en question (14a`. 14b`), présente une forme sensiblement en dents de sci au moins sur une partie de sa longueur, dispositif caractérisé en ce que les zones d'écrasement (14a, 14b) des parties mobiles (12a, 12b) du moule qui agissent en conjugaison, et qui sont pourvues d'un ensemble d'évidements (17a, 17b) et/ou de saillies (16a, 16b), présentent du côté opposé à la cavité de moulage (10) des arêtes d'écrasement (20a, 20b), qui s'étendent le long de la surface de séparation des deux parties (12a, 12b) du moule, et qui servent à séparer par écrasement la matière en excès (21).

8. Dispositif selon la revendication 7, caractérisé en ce que les deux zones d'écrasement associées (14a`, 14b`) des parties mobiles (12a, 12b), qui sont placées en regard l'une de l'autre et qui servent à réaliser le joint en forme de dents de scie (28), sont pourvues d'une denture.

9. Dispositif selon la revendication 7, caractérisé en ce que les dents en saillie (16a, 16b) de la zone d'écrasement de chaque partie mobile (12a, 12b) du moule, disposées en regard de l'arête d'écrasement correspondante (20a, 20b) et orientées vers l'autre partie (12b, 12a) du moule, présentent un profil oblique sur leur face (24a, 24b) située en regard de l'arête d'écrasement correspondante (20a, 20b), de telle manière que l'épaisseur de chaque dent aille en diminuant vers la partie opposée (12b, 12a) du moule.

10. Dispositif selon la revendication 7, caractérisé en ce que les arêtes d'écrasement (20a, 20b) se trouvent à une certaine distance du côté correspondant de chacune des zones d'écrasement (14a, 14b) pourvues d'évidements (17a, 17b) et/ou de saillies (16a, 16b), à l'opposé de la cavité de moulage (10).

11. Corps creux, fabriqué par soufflage à partir d'une ébauche en matière thermoplastique, comportant au moins un joint soudé réalisé par écrasement, et le long duquel se trouvent soudées l'une à l'autre des zones contiguës de la paroi du corps creux, la matière en excès ayant été séparée par écrasement, caractérisé en ce que la zone du joint soudé (28) réalisé en forme de dents de sci se prolonge par une nervure (29), du côté de sa bordure opposée à l'intérieur du corps creux, la forme de cette nervure correspondant à celle de la surface de séparation des deux parties (12a, 12b) du moule utilisé.

12. Corps creux selon la revendication 11, caractérisé en ce que la nervure (29) s'étend de manière symétrique par rapport à la zone en dents de scie du joint soudé.

13. Corps creux selon la revendication 11, caractérisé en ce qu'il comporte une paroi constituée d'au moins deux couches de matières différentes.

14. Corps creux selon la revendication 13, constitué d'au moins trois couches, dont l'une joue le rôle de couche porteuse, une autre couche plus mince servant de barrière d'arrêt, caractérisé en ce que la couche d'arrêt (31) est disposée du côté de l'intérieur du corps creux.

# FIG.1

III

III

14a

14b

12

14a"

14b"

14a'

14b'

22a

22b

24a

24b

18

31

12b

12a

11

30

32

# FIG.2

20a

14a"

12a

14a'

24a

22a

FIG.3

FIG.4

FIG.5

FIG.6

**FIG.7**

14a″ 20a 20b 14b″

12a 12b

22a 22b

IX IX

21

29

28 33

**FIG.8**

**FIG.9**

28

29

VIII VIII

133

128

129

**FIG.10**